(19) Europäisches Patentamt
European Patent Office
Office européen des brevets

(11) EP 0 968 758 A2

(12) **EUROPÄISCHE PATENTANMELDUNG**

(43) Veröffentlichungstag:
**05.01.2000 Patentblatt 2000/01**

(51) Int. Cl.[7]: **B01D 71/80**, B01D 53/22

(21) Anmeldenummer: **99112143.5**

(22) Anmeldetag: **24.06.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **01.07.1998 DE 19829397**

(71) Anmelder:
**BASF AKTIENGESELLSCHAFT**
**67056 Ludwigshafen (DE)**

(72) Erfinder:
- **Mehler, Christof, Dr.**
  **67061 Ludwigshafen (DE)**
- **Gottschalk, Axel, Dr.**
  **67435 Neustadt (DE)**
- **Breiner, Ulrike, Dr.**
  **68642 Bürstadt (DE)**
- **Stadler, Reimund Erich, Prof. Dr.,**
  **(DE)**
- **Goldacker, Thorsten**
  **95445 Bayreuth (DE)**

(54) **Verwendung mikrophasenseparierter Polymermischungen für die Herstellung von permeablen Membranen**

(57) Verwendung mikrophasenseparierter Polymermischungen, bestehend aus A-B-C-Dreiblockcopolymeren mit einem elastomeren Mittelblock B und A'-C'-Zweiblockcopolymeren, für die Herstellung von permeablen Membranen.

EP 0 968 758 A2

## Beschreibung

Die vorliegende Erfindung betrifft die Verwendung mikrophasenseparierter Polymermischungen bestehend aus A-B-C-Dreiblockcopolymeren mit einem elastomeren Mittelblock B und A' -C' -Zweiblockcopolymeren für die Herstellung von permeablen Membranen. Des weiteren betrifft die Erfindung diese Membranen sowie deren Verwendung für die Trennung von Gasgemischen.

Für die Auftrennung von Stoffgemischen in fluider Phase mit Hilfe von Membranen kann mittlerweile auf ein breites Spektrum an Methoden zurückgegriffen werden. Beispielsweise lassen sich Elektrolyt/Wasser-Gemische mittels Umkehrosmose, Dialyse, Elektrodialyse oder Membrandestillation, Gemische aus organischem Substrat und Wasser oder aus Kolloid und Wasser mittels Ultrafiltration sowie Gemische unterschiedlicher organischer Substrate mittels Pervaporation auftrennen, wobei jeweils an die Aufgabenstellung angepaßte Membrantypen bzw. -materialien zu verwenden sind (s.a. E. Staude, Membranen und Membranprozesse, VCH Verlagsgesellschaft, Weinheim, 1992, Seiten 1-7).

Um Gase, insbesondere superkritische Gase wie Sauerstoff, Kohlendioxid oder Wasserstoff, aus Gemischen abzutrennen, setzt man häufig Membrane aus Polymeren mit einer hohen Glasübergangstemperatur $T_g$, also z.B. Polyvinylchlorid, Celluloseacetat oder Polysulfon ein. Bei diesen Membranen gelingt die Auftrennung diffusionskontrolliert, d.h. kleinere Partikel verfügen über eine größere Penetrationsneigung.

Sollen hingegen flüchtige organische Verbindungen oder auch höhere Kohlenwasserstoffe wie Propan oder n-Butan selektiv aus z.B. natürlichen Gasvorkommen oder Wasserstoff abgetrennt werden, greift man auf Polymermaterialien mit elastischen Eigenschaften wie cis-Polyisopren oder Polydimethylsiloxane zurück. Daß die flüchtigen organischen Verbindungen sich im Vergleich zu beispielsweise superkritischen Gasen besser abtrennen lassen, hat seine Ursache in der höheren Löslichkeit der flüchtigen organischen Verbindungen in dem genannten Membranmaterial. Andererseits wurde aber auch gefunden, daß mit Membranen aus Poly(1-trimethylsilyl-1-propin), einem Material, das sich durch einen $T_g$-Wert größer 250°C auszeichnet, ebenfalls flüchtige organische Verbindungen selektiv abtrennen lassen (s.a. B. Freeman, J. Pinnau, TRIP, 1997, S. 167-173).

Bei den beschriebenen Membranmaterialien handelt es sich ausschließlich um homopolymere Verbindungen.

Freeman und Pinnau (ibd., S 169) schlagen zur Optimierung des Trennverhaltens vor, das polymere Rückgrat des Homopolymeren dahingehend zu verändern, daß die Torsionsbewegungen minimiert werden. Dieses gelingt in der Regel über den Einbau sterisch anspruchsvoller Seitenäste. Allerdings lassen sich sterisch abgeschirmte Monomere weniger effektiv polymerisieren und neigen zudem, z.B. bei kationisch oder radikalisch initiierten Polymerisationen, zu Umlagerungsreaktionen, wodurch ein uneinheitliches Polymerrückgrat gebildet wird, dessen Struktur sich nicht mehr verläßlich voraussagen läßt. Membranmorphologien mit geeigneten Eigenschaften lassen sich auf diese Weise nicht bzw. nicht reproduzierbar erhalten.

Homogene Polymerblends aus einerseits Polyetherimiden, Polyethersulfonen oder Polyimiden als Hauptmischungskomponente und Polyvinylpyrrolidon als Minderkomponente andererseits werden bei Marcel Mulder, "Basic Principles of Membrane Technology", Kluwer Academic Publishers, 1991, S. 40, 41, als geeignete Membranmaterialien beschrieben, ohne jedoch auf strukturelle Merkmale oder besondere Trenneigenschaften näher einzugehen. Den genannten Komponenten gemein ist, daß sie über eine hohe Glasübergangstemperatur von größer 170°C verfügen.

U. Breiner, Dissertation 1997, Universität Mainz, Kapitel 9, beschreibt binäre Mischungen aus Poly(styrol-b-butadien-b-methylmethacrylat)-Dreiblockcopolymeren und Poly(styrol-b-methylmethacrylat)-Zweiblockcopolymeren und macht Ausführungen zur lamellaren Morphologie der genannten Polymermischung. Allerdings fehlt es an jeglichen Hinweisen über mögliche Anwendungsfelder der erhaltenen Mischungen.

Es wäre wünschenswert, für die Auftrennung von fluiden Mischungen Membrane auf der Basis von Polymermischungen verwenden zu können, die sich ohne größeren Aufwand an das jeweilige Trennproblem anpassen lassen, auf einfache Weise reproduzierbar zugänglich sind und über eine definierte Morphologie verfügen.

Der vorliegenden Erfindung lag daher die Aufgabe zugrunde, eine Membran aus einem polymeren Blendmaterial zu entwickeln, mit dem das Permeabilitätsverhalten auf unterschiedliche Trennprobleme eingestellt werden kann.

Demgemäß wurde die Verwendung von mikrophasenseparierten Polymermischungen, bestehend aus ABC-Dreiblockcopolymeren und A'C'-Zweiblockcopolymeren für die Herstellung permeabler Membranen gefunden. Des weiteren wurden diese Membranen und deren Verwendung für die Trennung von fluiden Mischungen gefunden.

Der Block A des verwendeten ABC-Dreiblockcopolymeren setzt sich im wesentlichen aus vinylaromatischen Monomereinheiten zusammen. Geeignet sind insbesondere Verbindungen, die unter die allgemeine Formel (I) fallen

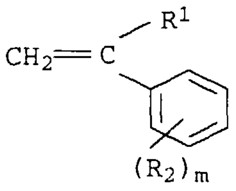

(I)

$R^1$ und $R^2$ stehen unabhängig voneinander für Wasserstoff, Halogen oder lineares oder verzweigtes $C_1$- bis $C_8$-Alkyl, m ist eine ganze Zahl von 1 bis 3. Exemplarisch seien genannt als geeignete Verbindungen (I) Styrol, p-Chlorstyrol, α-Methylstyrol, p-Methylstyrol, Vinyltoluol und p-tert-Butylstyrol. Der Block A kann ebenfalls aus beliebigen Mischungen der genannten Verbindungen zusammengesetzt sein. Bevorzugt wird der Block A jedoch ausschließlich aus Styrol als Monomereinheit gebildet.

Das mittlere Molekulargewicht des Blocks A kann in weiten Bereichen variiert werden. Geeignete mittlere Molekulargewichte $M_n$ liegen im allgemeinen im Bereich von 2000 bis 120000, bevorzugt von 5000 bis 70000 g/mol.

Als ABC-Dreiblockcopolymere kommen im allgemeinen solche Verbindungen in Frage, die über einen elastomeren Mittelblock B verfügen, d.h. die Komponente B weist als Homo- oder Copolymer eine Glasübergangstemperatur $T_g$ kleiner 20°C, bevorzugt kleiner 0°C und insbesondere kleiner -20°C auf. Prinzipiell können alle olefinisch ungesättigten Monomereinheiten für die Herstellung des Blocks B eingesetzt werden, solange das Kriterium des $T_g$-Wertes erfüllt ist. Auch Mischungen an olefinisch ungesättigten Monomeren sind möglich.

Bevorzugt werden konjugierte Diene als Monomere für den Block B eingesetzt, wobei solche aus 4 bis 16 C-Atomen bevorzugt sind. Besonders geeignet sind konjugierte Diene aus 4 bis 8 C-Atomen. Neben linearen können auch cyclische konjugierte Diene verwendet werden. Die genannten konjugierten Diene können mit Alkylgruppen, bevorzugt $C_1$- bis $C_3$-Alkyl, insbesondere Methyl, substituiert sein.

Beispielsweise seien genannt 1,3-Butadien, 1,3-Pentadien, 2-Methyl-1,3-butadien, 2,3-Dimethyl-1,3-butadien sowie konjugierte Hexadiene, bevorzugt 1,3-Hexadien. Besonders geeignet als Monomere für den Block B sind 1,3-Butadien und 2-Methyl-1,3-butadien. Die vorgenannten Verbindungen können auch in Form beliebiger Mischungen für die Herstellung des Blocks B eingesetzt werden.

Der Block B des ABC-Dreiblockcopolymeren kann ebenfalls in hydrierter oder partiell hydrierter Form vorliegen. Unter diesen Blöcken ist jener Block B bestehend aus hydrierten 1,3-Butadieneinheiten bevorzugt.

Unter hydrierte Blöcke B fallen im allgemeinen solche Blöcke, in denen mindestens die Hälfte aller möglichen Doppelbindungen, die ursprünglich vorgelegen haben, hydriert sind, d.h. der Hydriergrad liegt im Bereich von 50 bis 100 %, bevorzugt von 70 bis 100 % und besonders bevorzugt von 90 bis 100 %.

Das mittlere Molekulargewicht des Blocks B kann über einen weiten Bereich variiert werden. Es wird in der Regel so eingestellt, daß die angestrebten Eigenschaften der Polymermischungen und damit die jeweils gewünschten Membraneigenschaften erhalten werden. Im allgemeinen kann das zahlenmäßig mittlere Molekulargewicht $M_n$ des Blocks B Werte im Bereich von 5000 bis 200000, bevorzugt von 10000 bis 150000 g/mol annehmen.

Der Block C des ABC-Dreiblockcopolymeren wird üblicherweise aus $C_1$- bis $C_{18}$-Alkylestern oder Acryl- oder Methacrylsäure oder von beliebigen Mischungen dieser Verbindungen gebildet.

Als Acrylester sind z.B. geeignet Methyl-, Ethyl-, n-Propyl, i-Propyl-, n-Butyl-, i-Butyl-, s-Butyl-, t-Butyl-, Pentyl-, Hexyl-, Heptyl-, Octyl-, 2-Ethylhexyl-, Nonyl-, Decyl-, Lauryl- oder Stearylacrylat. Bevorzugt werden Methylacrylat, n-Butylacrylat oder 2-Ethylhexylacrylat oder Mischungen dieser Monomeren eingesetzt.

Als Methacrylester sind zum Beispiel geeignet Methyl-, Ethyl-, n-Propyl, i-Propyl-, n-Butyl-, i-Butyl-, s-Butyl-, t-Butyl-, Pentyl-, Hexyl-, Heptyl-, Octyl-, 2-Ethylhexyl-, Nonyl-, Decyl-, Lauryl- oder Stearylmethacrylat. Auch Mischungen der vorgenannten Verbindungen können eingesetzt werden. Bevorzugt als Methacrylester sind Methylmethacrylat und t-Butylmethacrylat.

Die Verwendung von hydroxy-, epoxy- und aminofunktionellen Methacrylaten und Acrylaten ist ebenfalls möglich. Hierbei ist es vorteilhaft, die funktionellen Gruppen durch z.B. Trialkylsilylgruppen vor der Polymerisation zu schützen. Derartige Polymerisationsverfahren in Anwesenheit von Schutzgruppen sind bei S. Nakahama et al, Prog. Polym. Sci. Vol. 15, 299-335, 1990 beschrieben.

Die den Block C bildenden Acrylate und/oder Methacrylate können bis zu 50 Gew.-%, bevorzugt in einer Menge von 1 bis 20 Gew.-%, durch die folgenden beispielhaft aufgeführten Comonomere ersetzt sein, also durch p-Aminostyrol, p-Hydroxystyrol, p-Vinylbenzoesäure, Acrylsäure, Methacrylsäure, Acrylamid, Methacrylamid, Maleinsäure sowie deren Imide oder $C_1$- bis $C_{10}$-Alkylester, Fumarsäure sowie deren Imide oder $C_1$- bis $C_{10}$-Alkylester, Itaconsäure sowie deren Imide oder $C_1$- bis $C_{10}$-Alkylester, Acrylnitril, Methacrylnitril, Hydroxyalkyl(meth)acrylate oder Lactone, z.B. ε-Caprolactone.

Das mittlere Molekulargewicht des Blocks C kann über einen weiten Bereich variiert werden. Geeignete mittlere Molekulargewichte $M_n$ liegen im allgemeinen im Bereich von 2000 bis 120000, bevorzugt von 5000 bis 70000 g/mol.

Die Gewichtsverhältnisse der Komponenten A, B und C können in weiten Bereichen variiert werden. Im allgemeinen liegt der Anteil des Blocks A, bezogen auf das Gesamtgewicht des ABC-Dreiblockcopolymeren, im Bereich von 10 bis 60 Gew.-%, bevorzugt von 20 bis 50 Gew.-%. Der Anteil des Blocks B bewegt sich bevorzugt im Bereich von 10 bis 80, besonders bevorzugt im Bereich von 20 bis 60 und insbesondere im Bereich von 30 bis 50 Gew.-%. Die bevorzugten Anteile des Blocks C verhalten sich wie diejenigen des Blocks A. Die Summe der Gewichtsprozente der Komponenten A bis C addiert sich stets zu 100.

Geeignete Dreiblockcopolymere weisen im allgemeinen ein mittleres Molekulargewicht $M_n$ größer 10000, bevorzugt größer 30000 g/mol auf, wobei regelmäßig solche Dreiblockcopolymere mit einem mittleren Molekulargewicht $M_n$ im Bereich von 35000 bis 500000, bevorzugt von 40000 bis 270000 g/mol eingesetzt werden.

Die Herstellung der ABC-Blockcopolymeren kann nach bekannten Methoden der anionischen Blockcopolymerisation durch sequentielle Addition der Monomeren oder auch durch Kopplung der entsprechenden Blöcke erfolgen. Derartige Verfahren werden z.B. in den US-Patentschriften 3 251 905, 3 390 207, 3 598 887 und 4 219 627 ausführlich beschrieben. Als Initiatoren für die Polymerisation eignen sich alkalimetallorganische Verbindungen, vorzugsweise Lithiumalkyle wie Methyllithium, Ethyllithium, n- oder s-Butyllithium oder Isopropyllithium. Besonders bevorzugt wird n- oder s-Butyllithium eingesetzt. Als Lösungsmittel für die Polymerisation eignen sich zweckmäßig geradkettige oder verzweigte aliphatische Kohlenwasserstoffe wie n-Octan oder n-Hexan, sowie einfache oder substituierte cycloaliphatische und aromatische Kohlenwasserstoffe wie Cyclohexan, Methylcyclohexan oder Toluol, Benzol sowie jede beliebige Mischung der aliphatischen, cycloaliphatischen und aromatischen Kohlenwasserstoffe. Vorteilhaft wird Cyclohexan als Lösungsmittel verwendet. Als Lösungsmittelkomponenten sind ferner Ether wie Tetrahydrofuran oder Diethylether sowie tertiäre Amine wie z.B. Tetramethylethylendiamin oder Pyridin in Konzentrationen von 0,01 bis 20, vorzugsweise 0,01 bis 2 Gew.-% geeignet. Besonders bevorzugt ist Tetrahydrofuran.

Alle Einsatzstoffe müssen von sauerstoff- und protonenaktiven Verunreinigungen befreit werden, was z.B. durch Kontaktieren mit Metallorganylen oder durch Umsetzung mit z.B. Calciumhydrid erfolgen kann. Die Durchführung der Polymerisation erfolgt unter Inertgasbedingungen bei Temperaturen von -100 bis +120°C, vorzugsweise bei -80 bis 80°C. Es wird bei Drücken gearbeitet, bei denen die Monomeren und Lösungsmittel bei der Polymerisationstemperatur nicht verdampfen. Nach beendeter Polymerisation wird das Polymerisationsgemisch mit einer ausreichenden Menge Wasser, Methanol oder Isopropanol versetzt, um die aktiven Endgruppen bzw. überschüssigen Initiator zu desaktivieren.

Im allgemeinen wird so vorgegangen, daß in einer ersten Polymerisationsstufe der vinylaromatische Kohlenwasserstoff zur Bildung des A-Blocks vollständig auspolymerisiert wird, im zweiten Polymerisationsschritt der Dienkohlenwasserstoff zur Bildung des B-Blocks vollständig umgesetzt wird. Dabei entstehen scharfe Übergänge zwischen den einzelnen Blöcken.

Es ist vorteilhaft, das lebende Anion des Polydienblockes mit sterisch anspruchsvollen Verbindungen wie Diphenylethylen zu verkappen. Hierdurch wird ein Angriff des Anions auf die Estergruppierung des (Meth)acrylats der Komponente C vermieden und die Reaktion ausschließlich oder nahezu ausschließlich über die reaktive Doppelbindung der (Meth)acrylate weitergeführt.

Die so erhaltenen ABC-Blockcopolymeren können nach üblichen Verfahren durch Hydrierbehandlung in Polymere überführt werden, in denen die olefinisch ungesättigten Bindungen teilweise abgesättigt sind. Üblicherweise wird ein Hydrierungsgrad von 50 bis 100, bevorzugt von 70 bis 100 und insbesondere von 90 bis 100 Gew.-% eingestellt.

Die Hydrierung wird vorzugsweise mit molekularem Wasserstoff und Katalysatoren auf Basis von Metallen oder Metallsalzen der achten Gruppe des Periodensystems durchgeführt. Sie kann in heterogener Phase z.B. mit Raney-Nickel oder bevorzugt in homogener Phase mit Katalysatoren auf Basis von Salzen, insbesondere Carboxylaten, Alkoxiden oder Enolaten des Kobalts, Nickels oder Eisens, die mit Metallalkylen, insbesondere mit Aluminiumalkylen, kombiniert sind oder homogen durch in situ erzeugte Diimine aus z.B. Tosylhydrazid erfolgen. Verfahren zur selektiven Hydrierung von Blockcopolymeren werden u.a. in den US-Patentschriften 3 113 986 und 4 226 952 beschrieben.

Das Polymerisationsgemisch kann zur Isolierung des Polymeren nach bekannten Verfahren wahlweise direkt zur Trockne erhitzt oder mit Wasserdampf behandelt werden, wobei das Lösungsmittel abdestilliert wird. Es kann gleichfalls in einem Überschuß Nichtlösungsmittel wie z.B. Ethanol gefällt und mechanisch abgetrennt und getrocknet oder durch Extruderentgasung aufgearbeitet werden.

Der Restdoppelbindungsgehalt der olefinisch ungesättigten Bindungen wird durch Fourier-Analyse der Infrarotspektren oder durch iodometrische Titration nach Wijs sowie durch $^1$H-NMR-Spektroskopie ermittelt.

Das Gewichtsverhältnis der Monomeren im ABC-Blockcopolymeren kann nach üblichen Methoden bestimmt werden, z.B. durch oxidativen Abbau der unhydrierten Blockcopolymeren mit Osmiumtetroxid und gravimetrischer Analyse, IR-spektroskopisch oder über eine Bestimmung des Brechungsindex.

Bei der Charakterisierung der Blockcopolymeren werden die folgenden Methoden verwendet:

Die mittleren Molekulargewichte M und Molekulargewichtsverteilungen (Zahlenmittel $M_n$, Gewichtsmittel $M_w$, U (Uneinheitlichkeit) = $M_w/M_n$-1) werden durch Gelpermeationschromatographie anhand von Eichkurven für Polystyrol (Eichsubstanzen mit sehr enger Molekulargewichtsverteilung: $M_W/M_n$ ca. 1) bei 23°C in 0,125 gew.-%iger Tetrahydrofuranlösung bei einer Durchflußgeschwindigkeit von 1,5 ml/min [vgl. G. Glöckner, "Polymercharakterisierung durch Flüssigkeitschromatographie", Verlag A. Hütig, Heidelberg, 1982] gemessen.

Die chemische Zusammensetzung und Mikrostruktur des elastomeren Mittelblockes B (1,2 bzw. 1,4 Verknüpfung oder cis/trans Anteile des Diens im Block) wird üblicherweise durch $^1$H-NMR-Spektroskopie bestimmt. Die Glasübergangstemperaturen werden anhand dynamisch mechanischer Analyse (Meßfrequenz: 1 rad/s) ermittelt.

Geeignete A'C'-Zweiblockcopolymere verfügen über keinen Block mit elastomeren Eigenschaften wie für ABC-Dreiblockcopolymere beschrieben. Als Monomere für die Blöcke A' und C' kommen grundsätzlich die vorgehend beim ABC-Dreiblockcopolymer für die Blöcke A bzw. C beschriebenen Monomere in Frage.

Das mittlere Molekulargewicht $M_n$ des Blocks A' liegt in der Regel im Bereich von 500 bis 100000 g/mol, bevorzugt von 1000 bis 60000 g/mol, das des Blockes C' in der Regel im Bereich von 500 bis 100000 g/mol, bevorzugt von 1000 bis 60000 g/mol.

Die Gewichtsverhältnisse der Komponenten A' und C' können in weiten Bereichen variiert werden. Im allgemeinen liegt der Anteil des Blockes A', bezogen auf das Gesamtgewicht der A'C'-Zweiblockcopolymeren, im Bereich von 20 bis 80, bevorzugt von 30 bis 70 Gew.-%, der Anteil des Blocks C' entsprechend im Bereich von 80 bis 20, bevorzugt 70 bis 30 Gew.-%.

Geeignete Zweiblockcopolymere A'C' weisen im allgemeinen ein mittleres Molekulargewicht $M_n$ größer 10000, bevorzugt größer 30000 g/mol auf. In der Regel wird auf Zweiblockcopolymere mit einem mittleren Molekulargewicht $M_n$ im Bereich von 35000 bis 300000, bevorzugt von 40000 bis 180000 g/mol zurückgegriffen.

Die Herstellung der A'C'-Zweiblockcopolymeren erfolgt analog dem für die ABC-Dreiblockcopolymeren beschriebenen Herstellungsverfahren nach bekannten Methoden der anionischen Blockcopolymerisation durch sequentielle Addition der Monomeren oder über Kopplungstechniken. Herstellungsverfahren für A'C'-Zweiblockcopolymere werden z.B. bei Allen et al., Polym. Prepr. 1985, 26(1), S. 247, und bei Auschra et al., Macromolecules, 1993, 26, S. 6364, beschrieben.

Hinsichtlich der Charakterisierungsmethoden gilt das zu ABC-Blockcopolymeren Gesagte für A'C'-Blockcopolymere entsprechend.

In den für die Herstellung der erfindungsgemäßen Membranen geeigneten Polymermischungen können die ABC-Dreiblock- und A'C'-Zweiblockcopolymeren in den Blöcken A und A' und/oder C und C' hinsichtlich Monomerzusammensetzung und/oder Kettenlänge bzw. Molekulargewicht identisch als auch verschieden sein. Sofern die Blöcke A und A' sowie C und C' nicht völlig identisch sind bzw. in ihrer Monomerenzusammensetzung nicht übereinstimmen, sind diese Blöcke allerdings stets miteinander verträglich. Der Block B zeigt in der Regel nur eine geringe Verträglichkeit oder ist unverträglich mit den Blockeinheiten A und A' sowie C und C'. Unter der Verträglichkeit bzw. Kompatibilität zweier Polymerkomponenten versteht man im allgemeinen die Mischbarkeit dieser Komponenten oder die Neigung eines Polymeren, sich in einem anderen Polymeren zu lösen (vgl. B. Vollmert, Grundriß der makromolekularen Chemie, Volume IV, S. 222 ff., E. Vollmert-Verlag, 1979). Grundsätzlich gilt, je kleiner die Differenz der Löslichkeitsparameter zweier Polyrmere ist, um so besser sind sie miteinander verträglich. Da diese Parameter sowie die Mischungsenthalpie sich für viele Polymere nicht über Standardverfahren ermitteln lassen, hat man das Löslichkeitsverhalten indirekt zu ermitteln, z.B. über Torsionsvibrationsmessungen oder mittels dynamisch mechanischer Thermoanalyse (DTA). Ein Polymersystem, bestehend aus zwei oder mehreren Polymeren ist im allgemeinen dann als mischbar bzw. verträglich zu bezeichnen, wenn es optisch transparent ist, nur eine einzige Glasübergangstemperatur aufweist, die zudem zwischen denen der Ausgangspolymere liegt, oder wenn NMR-Relaxationsexperimente keine Spin-Spin- oder Spin-Gitter-Relaxation zeigen. Daneben können auch noch Trübungsmessungen und Lichtbeugungsmessungen sowie IR-spektroskopische und fluoreszenzspektroskopische Verfahren (L.A. Utracki, Polymer Alloys and Blends, S. 34-42, New York, 1989) eingesetzt werden. Beispiele miteinander mischbarer Polymere sind in verschiedenen Monographien detailliert aufgeführt (z.B. J. Brandrup und E.H. Immergut: Polymer Handbuch, 3. Aufl., 1989).

In einer bevorzugten Ausführungsform stimmen die Blöcke A, A' und C, C' in ihrer Monomerzusammensetzung überein. Exemplarisch sei hier auf Blöcke A, A' aus Styrol als Monomer sowie auf Blöcke C, C' aus Methylmethacrylat oder t-Butylmethacrylat als Monomerkomponente verwiesen. Demgemäß bestehen die erfindungsgemäßen Polymermischungen u.a. aus Poly(styrol-b-butadien-b-methylmethacrylat)-Dreiblockcopolymeren (SBM) und Poly(styrol-b-methylmethacrylat)-Zweiblockcopolymeren (SM) oder aus Poly(styrol-b-butadien-b-tert-butylmethacrylat)-Dreiblockcopolymeren und Poly(styrol-b-tert-butylmethacrylat)-Zweiblockcopolymeren.

Zur Herstellung der ABC-/A'C'-Blockcopolymermischungen kann man beispielsweise die Zwei- und Dreiblockcopolymeren in einem organischen Lösungsmittel aufnehmen und die erhaltene Lösung in ein polares flüssiges Medium wie Methanol, Ethanol, Wasser oder Gemische derartiger Flüssigkeiten geben. Vorteilhafterweise geschieht dieser Ausfällprozeß unter starkem Rühren. Als geeignete organische Lösungsmittel für die genannten Blockcopolymeren kommen halogenierte Kohlenwasserstoffe wie Dichlormethan oder Chloroform oder Ether wie Diethylether oder Tetrahydrofuran in Frage. Es kommen auch Mischungen der genannten Lösungsmittel in Frage. Gegebenenfalls kann das Lösungsmittel auch erwärmt werden. Es empfiehlt sich, die Polymermischung vor der Weiterverarbeitung sorgfältig von Lösungsmittelresten zu befreien.

Der Anteil an Dreiblockcopolymer in der Mischung aus Zwei- und Dreiblockcopolymer liegt im allgemeinen im Bereich von 10 bis 90 Gew.-%. Bevorzugt liegt dieser Anteil im Bereich von 30 bis 70, besonders bevorzugt im Bereich von 40 bis 60 Gew.-%. Der Anteil an Zweiblockcopolymeren liegt entsprechend im Bereich von 90 bis 10, bevorzugt 70 bis 30 und besonders bevorzugt 60 bis 40 Gew.-%.

Die für die erfindungsgemäße Verwendung einsetzbaren ABC-/A'C'-Polymermischungen zeichnen sich durch ein mikrophasensepariertes System mit lamellarer Morphologie aus. Diese Morphologie wird, anders als bei reinen Zweiblock- oder Dreiblocksystemen (vgl. R. Stadler et al., "Morphology and thermodynamics of symmetric Poly(A-block-B-block-C)triblockcopolymers", Macromolecules, 28 (1995), S. 3080; A.E. Woodward, "Atlas of Polymer Morphology", Hanser Publishers, New York, 1988, Chapter VI, Block Copolymers; J.V Dankins, "Property-structure relationship in Block copolymers - introduction" in D.C. Allport and W.H. Jones, "Block Copolymers", Applied Science Publishers, London 1973, Chapter 8A.1, S. 363 ff.), auch bei sehr geringen Anteilen an Elastomerkomponente B, bezogen auf das Gesamtgewicht der Polymermischung, beibehalten, d.h. eine Umwandlung in eine zylindrische, kugelförmige oder ellipsoide Morphologie findet nicht statt. Man beobachtet dieses Verhalten z.B. regelmäßig bei einem Anteil des Blocks B an der Polymermischung im Bereich von 5 bis 50 Gew.-%. Die gebildeten lamellaren Strukturen können z.B. über die Schichtenabfolge ABC/C'A'/A'C'/CBA/ABC/C'A'/A'C'/CBA beschrieben werden. Daneben sind in Abhängigkeit von Volumenanteil, Molekulargewicht und Verträglichkeit der Drei- und Zweiblockcopolymere auch zahlreiche andere Schichtvariationen möglich. Allen mikrophasenseparierten Polymermischungen eigen ist die Aufweitung der lamellaren Struktur des Dreiblockcopolymeren durch Zwischenlagerung einer oder mehrerer Zweiblockschichten selbst bei sehr geringen Anteilen an elastomerer Komponente B.

Die lamellare Überstruktur kann z.B. mittels Röntgenkleinwinkelstreuung oder Transmissionselektronenmikroskopie festgestellt werden.

Die beschriebenen Polymermischungen lassen sich zu permeablen Membranen mit guten Barriereeigenschaften verarbeiten, welche für die Auftrennung fluider Gasgemische verwendet werden können. Für die Herstellung der Membranen eignet sich ein Verfahren, wie bei M. Mulder, "Basic Principles of Membrane Technology", Kluwer Academic Publishers, Dordrecht, 1991, Kap. III, beschrieben. Beispielsweise lassen sich geeignete Membrane aus Lösungen der Polymermischungen durch kontrolliertes Verdampfen des Lösungsmittels erhalten. Geeignete Lösungsmittel sind zum Beispiel halogenierte Kohlenwasserstoffe wie Dichlormethan oder Chloroform, aromatische Verbindungen wie Benzol oder Toluol, aliphatische Ether wie Diethylether oder Tetrahydrofuran oder auch Ketone wie Aceton oder Methylethylketon. Besonders bevorzugt werden halogenierte Kohlenwasserstoffe eingesetzt, insbesondere Chloroform. Es können auch beliebige Mischungen der genannten Verbindungen eingesetzt werden. In Frage kommen neben vollständig mischbaren auch partiell oder vollständig unmischbare Lösungsmittelsysteme. Die sich bildende Polymermembran kann auf eine poröse Unterlage, z.B. auf eine Polyesterplatte, oder auf eine nicht poröse Unterlage aus Glas, Metall oder beispielsweise Polymethylmethacrylat oder Teflon aufgetragen werden.

Daneben kann die erfindungsgemäße Membran z.B. auch mittels Spin-coating, Roll-casting oder Extrusion erhalten werden.

Die vorliegende Erfindung wird anhand der nachfolgenden Beispiele näher erläutert.

Beispiele

Es wurde Poly(styrol-b-butadien-b-methylmethacrylat) (SBM) als Dreiblockcopolymer mit einem Molekulargewicht $M_n$ von 46000 g/mol mit einem Anteil von 30 Gew.-% Styrol, 38 Gew.-% Butadien und 32 Gew.-% Methylmethacrylat, bezogen auf das Gesamtgewicht des ABC-Dreiblockcopolymeren, eingesetzt. Als A'C'-Zweiblockcopolymere wurde Poly(styrol-b-methylmethacrylat) (SM) mit einem Molekulargewicht von 54000 g/mol verwendet. Das Zweiblockcopolymere setzte sich zusammen aus 46 Gew.-% Styrol und 54 Gew.-% Methylmethacrylat. Die Blockcopolymeren wurden nach bei Auschra et al., Macromolecules, 1993, 26, S. 6364, sowie C. Auschra, Dissertation, 1992, Universität Mainz, beschriebenen Verfahren synthetisiert.

Die Molekulargewichte wurden mittels Gelpermeationschromatographie mit Polystyrol als Standard bestimmt. Die Gewichtsanteile der Blockkomponenten wurden mittels $^1H$-NMR-Spektroskopie bestimmt.

Zur Herstellung der Polymermischungen wurden die Zwei- und Dreiblockcopolymere in warmem Tetrahydrofuran gelöst (1,2-1,5 % w/v) und die Lösung durch ein Filter in heftig gerührtes Methanol (10-fache Menge an eingesetzter Tetrahydrofuranlösung) gefällt. Die ausgefällte Polymermischung wurde im Hochvakuum bei 60°C getrocknet. Die nachfolgende Tabelle zeigt die Zusammensetzungen der hergestellten Polymermischungen sowie den Gewichtsanteil an Polybutadien als Komponente B, bezogen auf das Gesamtgewicht der eingesetzten Polymermischung. Alle aufgeführten ABC/A'C'-Polymermischungen zeigten eine lamellare Morphologie.

Tabelle

| | SBM [Gew.-%] | SM [Gew.-%] | Polybutadien- [a] Komponente [Gew.-%] |
|---|---|---|---|
| 1 | 77 | 23 | 30 |
| 2 | 66 | 34 | 25 |
| 3 | 53 | 47 | 20 |
| 4 | 39 | 61 | 15 |
| 5 | 26 | 74 | 10 |

[a] bezogen auf das Gesamtgewicht der Polymermischung

## Patentansprüche

1. Verwendung mikrophasenseparierter Polymermischungen, bestehend aus A-B-C-Dreiblockcopolymeren mit einem elastomeren Mittelblock B und A'-C'-Zweiblockcopolymeren, für die Herstellung von permeablen Membranen.

2. Verwendung nach Anspruch 1, dadurch gekennzeichnet, daß man mikrophasenseparierte Polymermischungen, bestehend aus

   i) 10 bis 90 Gew.-% eines ABC-Dreiblockcopolymeren, aufgebaut aus einem Block A aus vinylaromatischen Monomeren, einem Block B aus konjugierten Dienen und einem Block C aus $C_1$- bis $C_{18}$-Alkylestern der Acryl- oder Methacrylsäure oder deren Mischungen und

   ii) 90 bis 10 Gew.-% eines A'C'-Zweiblockcopolymeren, aufgebaut aus einem Block A' aus vinylaromatischen Monomeren und einem Block C' aus $C_1$- bis $C_{18}$-Alkylestern der Acryl-oder Methacrylsäure oder deren Mischungen

   verwendet.

3. Verwendung nach den Ansprüchen 1 oder 2, dadurch gekennzeichnet, daß der Anteil des Blocks B, bezogen auf die Polymermischungen, im Bereich von 5 bis 50 Gew.-% liegt.

4. Membran, bestehend aus mikrophasenseparierten Polymermischungen aus A-B-C-Dreiblockcopolymeren mit einem elastomeren Mittelblock B und A'-C'-Zweiblockcopolymeren.

5. Verwendung der Membran gemäß Anspruch 4 für die Auftrennung von fluiden Gasgemischen.